# EUROPÄISCHE PATENTSCHRIFT

(11) **EP 0 854 063 B1**
(45) Veröffentlichungstag und Bekanntmachung des Hinweises auf die Patenterteilung: **17.07.2002**
(21) Anmeldenummer: 98100865.9
(22) Anmeldetag: 19.01.1998
(51) Int. Cl.: B60N 2/36, E05B 15/10

(54) **Vorrichtung zum Verriegeln von geteilt klappbaren Rückenlehnen an Kraftfahrzeugrücksitzen**
Device for locking tiltable split backrests on motor vehicle rear seats
Dispositif de verrouillage pour dossiers divisibles et rabattables de sièges arrière de véhicules

(30) Priorität: 20.01.1997 DE 19701775
(43) Veröffentlichungstag der Anmeldung: 22.07.1998
(73) Patentinhaber: ADAM OPEL AG, 65423 Rüsselsheim (DE)
(72) Erfinder: Schmidt, Reinhard, 57368 Lennestadt (DE)

(56) Entgegenhaltungen:
- EP-A- 0 697 307
- DE-A- 4 435 835
- DE-A- 4 442 686
- DE-A- 19 522 721
- DE-U- 9 313 070
- US-A- 5 125 695

## Beschreibung

Die Erfindung betrifft eine Vorrichtung zum Verriegeln von geteilt klappbaren Rückenlehnen an Kraftfahrzeugrücksitzen nach dem Oberbegriff des Patentanspruches 1.

Eine aus EP 0 697 307 A2 bekannte derartige Vorrichtung besitzt ein Rastelement, mit welchem jeweils zwei Rückenlehnen, beispielsweise einer Fondbank eines Kraftfahrzeugs miteinander in ihrer Normalposition verriegelt werden können. Das Rastelement wird von einer in Abhängigkeit von Steuersignalen aktivierten Betätigungseinrichtung in die Verriegelungsstellung bewegt. Das Rastelement ist hierzu mit einer Vorspannkraft beaufschlagt und die Betätigungseinrichtung weist ein Eingriffsteil auf, welches entlang einer begrenzten Bewegungsstrecke zur Bewegung des Rastelements in seine Verriegelungsstellung in eine Eingriffsstelle des Rastelements eingreift. Maßnahmen zum Entriegeln der so geschaffenen Verbindung sind bei der bekannten Vorrichtung nicht vorgesehen.

Beim normalen Fahrbetrieb befinden sich die Rückenlehnen am Kraftfahrzeugrücksitz in ihren im wesentlichen vertikalen Positionen. In diesen Positionen werden sie mit Hilfe einer Verriegelungseinrichtung form- und kraftschlüssig miteinander verbunden. Häufig ist es erwünscht, die Verriegelung der beiden Kraftfahrzeugsitze zu lösen, damit wenigstens eine der beiden Rückenlehnen nach vorne geklappt werden kann, um zusätzlichen Laderaum im Kraftfahrzeug zu schaffen.

Aufgabe der Erfindung ist es, eine Vorrichtung der eingangs genannten Art zu schaffen, bei der auch das Entriegeln der Rückenlehnen an den Kraftfahrzeugrücksitzen, insbesondere an einer Fondsitzbank, mit einfachen Mitteln erreicht wird.

Diese Aufgabe wird erfindungsgemäß durch die kennzeichnenden Merkmale des Patentanspruches 1 gelöst.

Das Rastelement ist mit einer Vorspannkraft beaufschlagt, die entgegengesetzt zur Betätigungseinrichtung wirkt. Die Vorspannkraft, welche von einer Feder erzeugt sein kann, wirkt in Entriegelungsrichtung und wirkt zumindest in der Verriegelungsstellung auf das Rastelement. Die Betätigungseinrichtung übt dabei dauf das Rastelement eine Kraft aus, welche entgegengesetzt zur Vorspannkraft wirkt, so daß das Rastelement in seine Verriegelungsposition gebracht werden kann. Wenn die Betätigungseinrichtung außer Eingriff mit dem Rastelement kommt, wird das Rastelement aufgrund der Vorspannkraft in die Entriegelungsposition gebracht.

Die Betätigungseinrichtung kann eine Antriebseinrichtung aufweisen, welche elektrisch oder mechanisch aktivierbar ist. Hierzu kann der Antrieb elektromagnetisch, insbesondere in Form eines Elektromotors, ausgebildet sein. Von der Antriebseinrichtung wird ein Eingriffsteil angetrieben. Dieses Eingriffsteil kann am Rastelement angreifen und dieses entgegengesetzt zur Vorspannkraft bewegen. Ferner kann das Eingriffsteil derart am Rastelement angreifen, daß es dieses in seiner Verriegelungsstellung gegen die Vorspannkraft hält. Der Antrieb kann auch mit Hilfe mechanischer von Hand zu betätigender Mittel erfolgen.

Das Eingriffsteil kann auf einer Kreisbahn bewegt werden. Entlang eines bestimmten Streckenabschnittes auf dieser Kreisbahn greift das Eingriffsteil am Rastelement an und bewegt dieses aus der Entriegelungsposition gegen die Vorspannkraft in die Verriegelungsposition. In vorteilhafter Weise verbleibt das Eingriffsteil in der Verriegelungsposition in Eingriff mit dem Rastelement und hält das Rastelement, auf welches die Vorspannkraft in Richtung zur Entriegelungsposition hin wirkt, in der Verriegelungsposition.

Um das Rastelement aus der Verriegelungsposition zu lösen, ist es lediglich erforderlich, das Eingriffsteil so zu bewegen, daß es außer Eingriff mit dem Rastelement kommt.

Aufgrund der Vorspannkraft wird dann das Rastelement in seine Entriegelungsposition gebracht. Die beiden Rückenlehnen sind dann voneinander entkoppelt. Es kann dann beispielsweise eine der beiden Rückenlehnen in eine vorgeklappte Stellung zur Gewinnung zusätzlichen Laderaums im Kraftfahrzeug gebracht werden.

Die Bewegungssteuerung des Eingriffsteils gestaltet sich äußerst einfach. Um das Eingriffsteil aus seiner Verriegelungsposition in seine Entriegelungsposition zu bringen, ist es lediglich erforderlich, das Eingriffsteil entlang einer geringen Strecke, insbesondere in einem geringen Schwenkwinkel auf der Kreisbahn zu bewegen, damit es außer Eingriff mit dem Rastelement kommt. Um das Eingriffselement wieder in Eingriff mit dem Rastelement zu bringen, damit dieses in die Verriegelungsposition gebracht wird, wird das Eingriffsteil auf der Kreisbahn weiter bewegt, so daß es im Endabschnitt der Kreisbahnbewegung mit dem Rastelement in Eingriff kommt und dieses in seine Verriegelungsposition gegen die Vorspannkraft bewegt. Dabei wird das Eingriffsteil ebenfalls entlang einer bestimmten Wegstrecke von der Antriebseinrichtung der Betätigungseinrichtung angetrieben und insbesondere entlang eines bestimmten Schwenkwinkels auf der Kreisbahn bewegt. Das Eingriffsteil führt eine Drehbewegung entlang der Kreisbahn, um aus der verriegelten Position in die entriegelte Position und von dort wieder in die verriegelte Position zu kommen. Die für den Antrieb erforderliche Energie kann von einer elektrischen Stromquelle (Autobatterie oder dergl.) oder von Hand erbracht und über mechanische Mittel auf das Eingriffsteil übertragen werden.

Die Bewegungssteuerung läßt sich auf einfache Weise durchführen. Hierzu genügt es, wenn der jeweiligen Rückenlehne Positionsmelder, welche insbesondere als Schalter ausgebildet sind, vorgesehen sind. Diese sind derart miteinander verknüpft, daß nur dann ein Befehlssignal für den Antrieb des Eingriffsteils zur Bewegung des Rastelements in seine Verriegelungsposition abgegeben werden kann, wenn von beiden Positionsmeldern gemeldet wird, daß die Rückenlehnen sich in ihrer normalen Betriebsstellung befinden. Zum Lösen der Verriegelung genügt es, wenn einer der beiden Positionsmelder (Positionsschalter) ein Signal abgibt. Hieraus resultiert eine äußerst einfache Bedienung der Vorrichtung für das Verriegeln und Entriegeln der Rückenlehnen.

Anhand der Figuren wird an einem Ausführungsbeispiel die Erfindung noch näher erläutert. Es zeigt:
- Fig. 1:: zwei Rückenlehnen in ihrer normalen Betriebsstellung (Normalposition), in welcher sie miteinander verriegelt sind;
- Fig. 2:: eine Vorrichtung zum Verriegeln und Entriegeln der beiden Rückenlehnen in entriegelter Stellung; und
- Fig. 3:: die Vorrichtung in Fig. 2 in verriegelter Stellung.

In den Figuren sind zwei Rückenlehnen in ihrer normalen Betriebsposition, d.h. in vertikaler Position. Die beiden Rückenlehnen 2 und 3 sind für Fondsitze, insbesondere eine Fondbank eines Kraftfahrzeuges, vorgesehen. In dieser Normalposition wirkt zwischen den beiden Rückenlehnen 2 und 3 eine Vorrichtung 13 zum Verriegeln der beiden Rükkenlehnen. Die Vorrichtung 13 kann, wie im einzelnen noch erläutert wird, auch zum Entriegeln der beiden Rückenlehnen verwendet werden, so daß eine der beiden Rückenlehnen nach vorne geklappt werden kann.

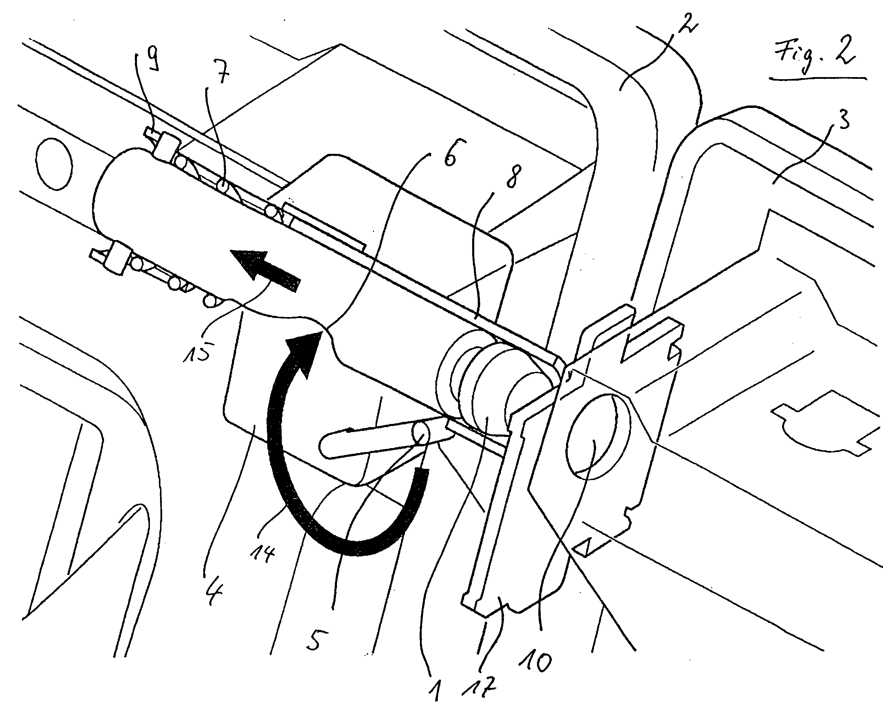

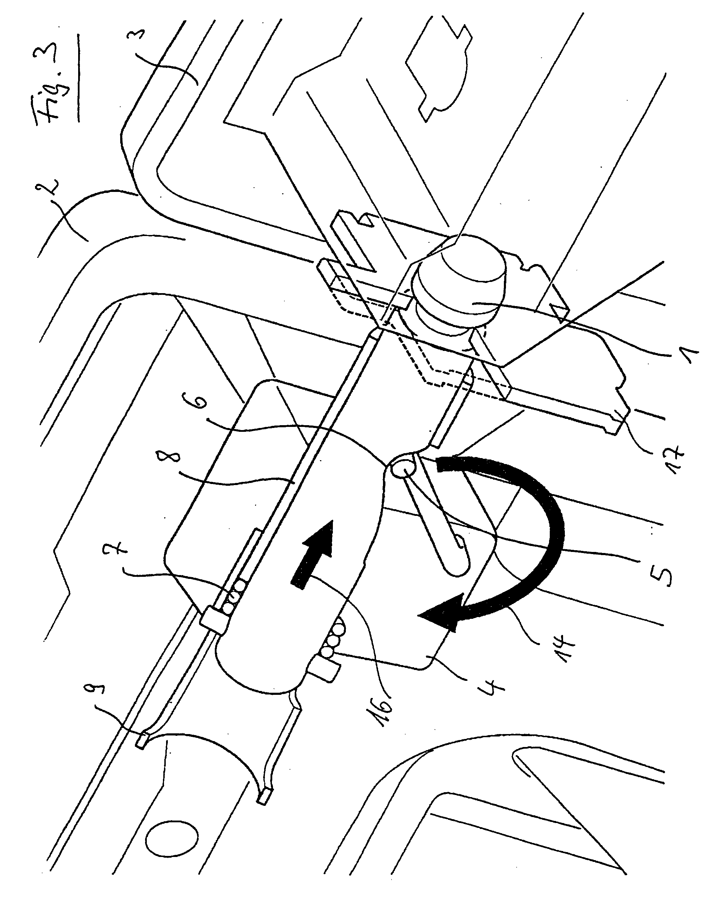

In den Figuren 2 und 3 ist im einzelnen die Vorrichtung 13 dargestellt. Diese besitzt eine in bevorzugter Weise elektrisch aktivierbare Betätigungseinrichtung 4, welche ein Eingriffsteil 5 aufweist, das beim Ausführungsbeispiel als Kurbel ausgebildet ist. Das Eingriffsteil 5 kann von einem Elektromotor der Betätigungseinrichtung 4 im Uhrzeigersinn (Pfeil 14) in Drehung versetzt werden.

Die Vorrichtung 13 besitzt ferner ein Rastelement 1, welches beim Ausführungsbeispiel als Rastbolzen ausgebildet ist. Der Rastbolzen kann in seiner axialen Richtung linear in beiden Richtungen (Pfeile 15 und 16) verschoben werden. Das Rastelement 1 ist an einer der beiden Rückenlehnen mittels einer Führung 8 verschiebbar gelagert. Beim Ausführungsbeispiel ist es die Rückenlehne 2. An der anderen Rückenlehne (beim Ausführungsbeispiel die Rückenlehne 3) befindet sich eine Rastöffnung 10 in einem fest mit der Rückenlehne 3 verbundenen Beschlag 17. Die Führung 8 ist ebenfalls fest mit dem Rahmen der Rückenlehne 2 verbunden.

In der Fig. 2 ist die entriegelte Position dargestellt. Das Eingriffsteil 5 befindet sich außer Eingriff mit einer Eingriffsstelle 6 am Rastelement 1. Das Rastelement 1 ist durch die Kraft einer Feder 7 in die dargestellte entriegelte Position gedrückt und liegt dabei an einem fest mit der Rückenlehne 2 verbundenen Anschlag 9 an. Die Vorspannkraft, welche von der Feder 7 aufgebracht wird, hat die Wirkrichtung des Pfeiles 15.

Um das Rastelement 1 in die in der Fig. 3 dargestellte verriegelte Position zu bringen, wird die Kurbel des Eingriffsteils 5 durch die Antriebseinrichtung der Betätigungseinrichtung 4 im Uhrzeigersinn (Pfeil 14) gedreht. Das Eingriffsteil 5 bewegt sich auf einer Kreisbahn und kommt nach Zurücklegung eines bestimmten Schwenkwinkels mit der Eingriffsstelle 6, welche als abgerundete Eingriffsnut ausgebildet ist, am Rastelement 1 in Eingriff. Die Eingriffsstelle 6 ist der Kreisbahn und der gewünschten lineare Verschiebebewegung in Richtung zur Verriegelungsposition (Pfeil 16 der Fig. 3) angepaßt. Das angetriebene Eingriffsteil 5 bewegt sich auf der Kreisbahn weiter und verschiebt das Rastelement 1 in die in Fig. 3 dargestellte Verriegelungsposition. In dieser Position greift die Spitze des Rastelements 1 durch die Rastöffnung 10 im Beschlag 17. Da der eine Teil (Schaftteil) des Rastelementes 1 in der fest mit der Rückenlehne 2 verbundenen Führung 8 abgestützt ist und der andere, nämlich der vordere Teil des Rastelementes 1 im Beschlag 17 abgestützt ist, sind die beiden Rückenlehnen 2 und 3 durch die dargestellte Verriegelung fest miteinander verbunden. Die beiden Rückenlehnen können nicht mehr gegeneinander verschwenkt werden.

In der in der Fig. 3 dargestellten verriegelten Position wirkt die Vorspannkraft (Rückstellkraft) der Feder 7 entgegen der Pfeilrichtung 16 auf das Rastelement 1. Da das Eingriffsteil 5 in der Eingriffsstelle 6 verbleibt und am Ende der Kreisbahn aufgrund des abgeschalteten Antriebs der Betätigungseinrichtung 4 in seiner Endstellung auf der Kreisbahn verbleibt, wird das Rastelement 1 in der verriegelten Position festgehalten.

Um das Rastelement aus der verriegelten Position zu lösen, wird das Eingriffsteil 5 von der Antriebseinrichtung der Betätigungseinrichtung 4 auf der Kreisbahn in Uhrzeigersinn (Pfeil 14) um einen geringen Schwenkwinkel verschwenkt, so daß es die in der Fig. 2 dargestellte Position einnimmt. Aufgrund der Rückstellkraft der Feder 7 wird dann das Rastelement 1 in die in der Fig. 2 dargestellte entriegelte Position zurückgebracht.

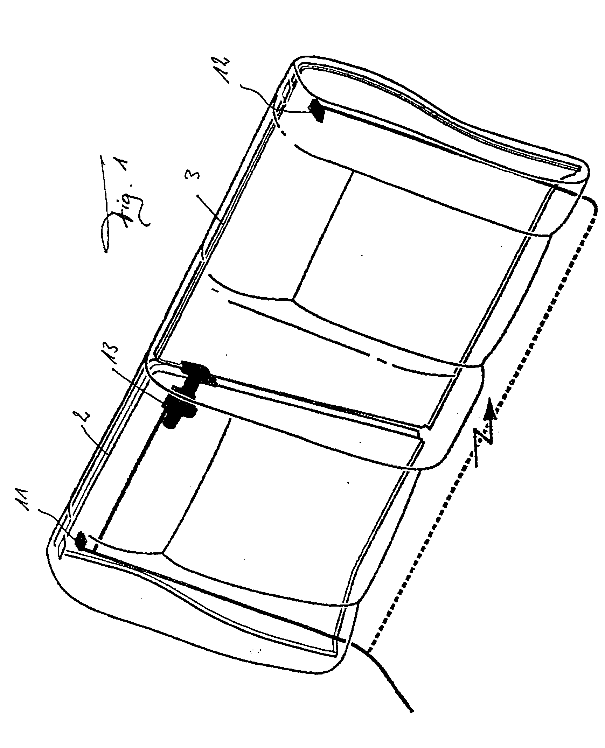

Die Antriebsbewegung des Eingriffsteiles 5 durch die Betätigungseinrichtung 4 kann nur dann veranlaßt werden, wenn zwei Positionsmelder 11 und 12, von denen jeder Positionsmelder einer Rückenlehne zugeordnet ist, feststellen, daß die beiden Rückenlehnen 2 und 3 sich in der in der Fig. 1 dargestellten Normalposition befinden. Die beiden Positionsmelder 11 und 12 können als Schalter ausgebildet sein, deren Schaltimpulse für den Antrieb des Eingriffsteiles 5 mit Und-Verknüpfung kombiniert werden. Hierdurch wird bei entriegelter Position des Rastelementes 1 (Fig. 2) die Kurbel des Eingriffsteiles 5 angetrieben, so daß sie sich in die Eingriffsposition mit der Eingriffsstelle 6 dreht und bei der angetriebenen Weiterdrehung, wie schon erläutert, das Rastelement 1 in die Verriegelungsposition der Fig. 3 schiebt. Hierzu ist das Rastelement und die Kreisbahn des Eingriffsteiles 5 sowie die Form der Eingriffsstelle 6 in der Weise vorgesehen, daß die angetriebene Drehbewegung am Ende der Kreisbahn des Eingriffsteiles 5 die Verschiebung des Rastelementes 1 in die Verriegelungsstellung durchführt.

Um das Eingriffsteil 5 aus der in der Fig. 3 dargestellten Verriegelungsposition heraus zu bewegen, genügt es, wenn einer der beiden als Schalter ausgebildeten Positionsmelder 11, 12 von Hand betätigt wird. Hierzu genügt eine Oder-Verknüpfung der beiden Positionsmelder 11, 12. Der Schaltbefehl, beispielsweise Schaltimpuls, veranlaßt eine kurzzeitige Antriebsbewegung, durch welche das Eingriffsteil 5 aus der Verriegelungsposition (Fig. 3) in die in der Fig. 2 dargestellte entriegelte Position gebracht wird.

Der Schaltbefehl zum Lösen der Verriegelung kann auch beim Lösen der in herkömmlicher Weise vorgesehenen Seitenverriegelung der jeweiligen Rückenlehne erzeugt werden. In gleicher Weise läßt sich das Rastelement in die Verriegelungsposition dann bewegen, wenn die vorher abgeklappte Rückenlehne wieder in ihre Normalposition gebracht worden ist und die Seitenverriegelung verriegelt worden ist. Man gewinnt dann ebenfalls wiederum eine Und-Verknüpfung, welche angibt, daß beide Seitenverriegelungen der Rückenlehnen in ihre verriegelte Position gebracht sind. Sobald dieser Zustand eingetreten ist, kann aufgrund dieser Und-Information der Antrieb für das Eingriffsteil 5 aktiviert werden.

Beim oben dargestellten Ausführungsbeispiel ist das Rastelement 1 als Rastbolzen ausgebildet. Es ist auch möglich, dieses Rastelement in Form eines flachen Riegels auszubilden, der mit seinem vorderen Sperrteil in eine entsprechend geformte Rastöffnung an der anderen Rückenlehne eingreift. Gegebenenfalls kann das vordere Sperrteil des flach ausgebildeten Riegels um etwa 90° entgegen der Fahrtrichtung gebogen bzw. gekröpft sein.

## Patentansprüche

1. Vorrichtung zum Verriegeln von geteilt klappbaren Rückenlehnen (2, 3) an Kraftfahrzeugrücksitzen mit einem Rastelement (1), mit welchem jeweils zwei Rückenlehnen (2, 3) miteinander in ihrer Normalposition verriegelbar sind, und einer in Abhängigkeit von Steuersignalen aktivierbaren Betätigungseinrichtung (4), durch welche das Rastelement (1) in seine Verriegelungsstellung bewegbar ist, wobei das Rastelement (1) mit einer Vorspannkraft beaufschlagt ist und die Betätigungseinrichtung (4) ein Eingriffsteil (5) aufweist, welches entlang einer begrenzten Bewegungsstrecke zur Bewegung des Rastelements (1) in seine Verriegelungsstellung in eine Eingriffsstelle (6) des Rastelements (1) eingreift, **dadurch gekennzeichnet, dass** das Rastelement (1) durch das Eingriffsteil (5) entgegen der Vorspannkraft in seine Verriegelungsstellung gebracht wird, und dass zum Entriegeln des Rastelements (1) das Eingriffsteil (5) aus dem Eingriff mit dem Rastelement (1) bewegt wird.

2. Vorrichtung nach Anspruch 1, **dadurch gekennzeichnet, dass** das Eingriffsteil (5) bei seiner Bewegung in den oder außer dem Eingriff mit dem Rastelement (1) jeweils innerhalb eines bestimmten Winkelbereiches auf einer Kreisbahn bewegbar ist.

3. Vorrichtung nach Anspruch 1 oder 2, **dadurch gekennzeichnet, dass** das Eingriffsteil (5) für eine Bewegung aus der Verriegelungsposition in die Entriegelungsposition und zurück zur Verriegelungsposition einmal auf einer Kreisbahn durch die Betätigungseinrichtung (4) bewegt ist.

4. Vorrichtung nach einem der Ansprüche 1 bis 3, **dadurch gekennzeichnet, dass** das Eingriffsteil (5) in der Verriegelungsstellung mit dem Rastelement (1) in Eingriff bleibt.

5. Vorrichtung nach einem der Ansprüche 1 bis 4, **dadurch gekennzeichnet, dass** beim Verriegeln die Betätigungseinrichtung (4) für den Antrieb des Rastelementes (1) so lange aktiviert ist, bis das Rastelement (1) in der Verriegelungsposition sich befindet.

6. Vorrichtung nach einem der Ansprüche 1 bis 5, **dadurch gekennzeichnet, dass** die Betätigungseinrichtung (4) zur Bewegung des Eingriffsteils (5) elektrisch oder mechanisch aktivierbar ist.

7. Vorrichtung nach Anspruch 6, **dadurch gekennzeichnet, dass** die Betätigungseinrichtung (4) zur Bewegung des Eingriffsteils (5) einen elektromagnetischen Antrieb, insbesondere Elektromotor, aufweist.

8. Vorrichtung nach einem der Ansprüche 1 bis 7, **dadurch gekennzeichnet, dass** zum Entriegeln ein Schaltimpuls erzeugt wird.

9. Vorrichtung nach einem der Ansprüche 1 bis 8, **dadurch gekennzeichnet, dass** die Betätigungseinrichtung (4) zum Verriegeln nur dann aktivierbar ist, wenn die Normalpositionen der beiden Rückenlehnen (2, 3) durch Positionsmelder (11, 12) erfaßt sind.

10. Vorrichtung nach Anspruch 9, **dadurch gekennzeichnet, dass** die Positionsmelder (11, 12) als Schalter ausgebildet sind.

11. Vorrichtung nach Anspruch 9 oder 10, **dadurch gekennzeichnet, dass** zur Aktivierung der Betätigungseinrichtung die Positionsmelder (11, 12) derart verknüpft sind, dass in der Verriegelungsposition des Rastelements (1) durch einen von einem der beiden Positionsmelder (11, 12) veranlaßten Schaltimpuls die Betätigungseinrichtung (4) zur Entriegelung aktivierbar ist und dass in der Entriegelungsposition des Rastelements (1) nur dann ein Verriegelungsbefehlsignal erzeugbar ist, wenn beide Positionsmelder (11, 12) ein Signal veranlassen.

12. Vorrichtung nach einem der Ansprüche 1 bis 11, **dadurch gekennzeichnet, dass** das Rastelement (1) entlang einer linearen Bewegungsstrecke geführt ist.

13. Vorrichtung nach einem der Ansprüche 1 bis 12, **dadurch gekennzeichnet, dass** das Rastelement (1) als Rastbolzen ausgebildet ist.

14. Vorrichtung nach einem der Ansprüche 1 bis 12, **dadurch gekennzeichnet, dass** das Rastelement (1) als Riegel mit flachem Profil ausgebildet ist.

15. Vorrichtung nach Anspruch 14, **dadurch gekennzeichnet, dass** ein vorderes Sperrteil des flachen Riegels, welches in eine Rastöffnung an der anderen Sitzlehne einschiebbar ist, entgegen der Fahrtrichtung abgebogen bzw. gekröpft ist.

## Claims

1. Device for locking backrests (2, 3) which can be folded in split fashion to motor vehicle rear seats with a latch element (1) with which in each case two backrests (2, 3) can be locked together in their normal position, and an actuator (4) which can be activated as a function of control signals and by which the latch element (1) can be moved into its locking position, wherein the latch element (1) is subjected to a pretensioning force and the actuator (4) comprises an engaging portion (5) which engages in an engagement point (6) of the latch element (1) along a limited path of movement for movement of the latch element (1) into its locking position, **characterised in that** the latch element (1) is moved by the engaging portion (5) against the pretensioning force into its locking position and **in that** the engaging portion (5) is moved out of engagement with the latch element (1) for release of the latch element (1).

2. Device according to claim 1, **characterised in that** during its movement into or out of engagement with the latch element (1) the engaging portion (5) is movable in each case within a given angular range on a circular path.

3. Device according to claim 1 or 2, **characterised in that** the engaging portion (5) is moved once on a circular path by the actuator (4) for movement out of the locking position into the release position and back to the locking position.

4. Device according to any of claims 1 to 3, **characterised in that** the engaging portion (5) remains in engagement with the latch element (1) in the locking position.

5. Device according to any of claims 1 to 4, **characterised in that**, upon locking, the actuator (4) for driving the latch element (1) is activated until the latch element (1) is in the locking position.

6. Device according to any of claims 1 to 5, **characterised in that** the actuator (4) is electrically or mechanically activatable for movement of the engaging portion (5).

7. Device according to claim 6, **characterised in that** the actuator (4) comprises an electromagnetic drive, in particular an electric motor, for movement of the engaging portion (5).

8. Device according to any of claims 1 to 7, **characterised in that** a switching pulse is generated for release.

9. Device according to any of claims 1 to 8, **characterised in that** the actuator (4) is activatable for locking only when the normal positions of the two backrests (2, 3) are detected by position indicators (11, 12).

10. Device according to claim 9, **characterised in that** the position indicators (11, 12) are designed as switches.

11. Device according to claim 9 or 10, **characterised in that** for activation of the actuator the position indicators (11, 12) are linked in such a way that in the locking position of the latch element (1) the actuator (4) is activatable for release by a switching pulse caused by one of the two position indicators (11, 12) and **in that** in the release position of the latch element (1) a locking command signal can be generated only when both position indicators (11, 12) cause a signal.

12. Device according to any of claims 1 to 11, **characterised in that** the latch element (1) is guided along a linear path of movement.

13. Device according to any of claims 1 to 12, **characterised in that** the latch element (1) is designed as a latch bolt.

14. Device according to any of claims 1 to 12, **characterised in that** the latch element (1) is designed as a bolt with a flat profile.

15. Device according to claim 14, **characterised in that** a front locking portion of the flat bolt, which can be inserted in a latch opening on the other seat rest, is bent away or cranked in a direction opposite the direction of travel.

## Revendications

1. Dispositif pour le verrouillage de dossiers de sièges (2, 3) rabattables séparément, de sièges arrière de véhicules, comprenant un élément d'encliquetage (1), par lequel deux dossiers de siège (2, 3) peuvent être verrouillés l'un à l'autre dans leur position normale, ainsi qu'un dispositif d'actionnement (4) activable en fonction de signaux de commande, par lequel l'élément d'encliquetage (1) peut être déplacé dans sa position de verrouillage, l'élément d'encliquetage (1) étant soumis à une force de précontrainte et le dispositif d'actionnement (4) comportant un élément de couplage (5) qui, sur une course de déplacement limitée, pour amener l'élément d'encliquetage (1) dans sa position de verrouillage, est en prise avec un point de couplage (6) de l'élément d'encliquetage (1), **caractérisé en ce que** l'élément d'encliquetage (1) est amené dans la position de verrouillage, à l'encontre de la force de précontrainte par l'élément de couplage (5) et **en ce que** pour déverrouiller l'élément d'encliquetage (1) on amène l'élément de couplage (5) hors de prise d'avec l'élément d'encliquetage (1)

2. Dispositif selon la revendication 1, **caractérisé en ce que** l'élément de couplage (5), pour son déplacement en prise avec ou hors de prise d'avec l'élément d'encliquetage (1), est déplacé suivant une trajectoire circulaire, à l'intérieur d'une plage angulaire donnée.

3. Dispositif selon la revendication 1 ou 2, **caractérisé en ce que** l'élément de couplage (5), pour un déplacement de la position de verrouillage dans la position de déverrouillage et de nouveau dans la position de verrouillage, est déplacé suivant une trajectoire circulaire par le dispositif d'actionnement (4).

4. Dispositif selon une des revendications 1 à 3, **caractérisé en ce que** l'élément de couplage (5), dans la position de verrouillage, reste en prise avec l'élément d'encliquetage (1).

5. Dispositif selon une des revendications 1 à 4, **caractérisé en ce que** lors du verrouillage, le dispositif d'actionnement (4) pour l'entraînement de l'élément d'encliquetage (1) est activé jusqu'à ce que ledit élément d'encliquetage (1) se trouve dans la position de verrouillage.

6. Dispositif selon une des revendications 1 à 5, **caractérisé en ce que** le dispositif d'actionnement (4) pour le déplacement de l'élément de couplage (5) peut être activé électriquement ou mécaniquement.

7. Dispositif selon la revendication 6, **caractérisé en ce que** le dispositif d'actionnement (4) pour le déplacement de l'élément de couplage (5), comporte un moyen d'entraînement électromagnétique, en particulier un moteur électrique.

8. Dispositif selon une des revendications 1 à 7, **caractérisé en ce que** pour le déverrouillage, une impulsion de commutation est produite.

9. Dispositif selon une des revendications 1 à 8, **caractérisé en ce que** le dispositif d'actionnement (4), pour le verrouillage, n'est activé que si les positions normales des deux dossiers (2,3) est détectée par des détecteurs de position (11, 12).

10. Dispositif selon la revendication 9, **caractérisé en ce que** les détecteurs de position (11, 12) sont conformés en interrupteurs.

11. Dispositif selon la revendication 9 ou 10, **caractérisé en ce que** pour activer le dispositif d'actionnement, les détecteurs de position (11, 12) sont combinés de telle sorte que, dans la position de verrouillage de l'élément d'encliquetage (1), le dispositif d'actionnement (4) peut être activé à des fins de déverrouillage par une impulsion de commutation déclenchée par l'un des deux détecteurs de position (11, 12), et **en ce que** dans la position de déverrouillage de l'élément d'encliquetage (1), un ordre de verrouillage ne peut être généré que si les deux détecteurs de position (11, 12) produisent un signal.

12. Dispositif selon une des revendications 1 à 11, **caractérisé en ce que** l'élément d'encliquetage (1) est guidé suivant une course de déplacement linéaire.

13. Dispositif selon une des revendications 1 à 12, **caractérisé en ce que** l'élément d'encliquetage (1) est conformé en axe d'encliquetage.

14. Dispositif selon une des revendications 1 à 12, **caractérisé en ce que** l'élément d'encliquetage (1) est conformé en verrou à profil plat.

15. Dispositif selon la revendication 14, **caractérisé en ce qu'**une portion antérieure du verrou plat, qui peut pénétrer dans une ouverture d'encliquetage dans l'autre dossier de siège, est cintrée ou coudée dans la direction opposée à la direction de déplacement.
